# EUROPEAN PATENT SPECIFICATION

(11) **EP 0 313 261 B1**
(45) Date of publication and mention of the grant of the patent: **02.03.1994**
(21) Application number: 88309539.0
(22) Date of filing: 12.10.1988
(51) Int. Cl.: A41D 31/02

(54) **Weather resistant lined garments**
Gefütterte Wetterfeste Bekleidung
Vêtements doublés résistants aux intempéries

(30) Priority: 21.10.1987 US 111955; 12.08.1988 US 231760
(43) Date of publication of application: 26.04.1989
(73) Proprietor: W.L. GORE & ASSOCIATES, INC., Newark, Delaware 19714-9206 (US)
(72) Inventor: Norvell, Jean, Newark Delaware 19713 (US)
(74) Representative: Klunker . Schmitt-Nilson . Hirsch

(56) References cited:
- EP-A- 0 081 850
- DE-A- 2 737 756
- FR-A- 2 258 262
- GB-A- 2 131 678
- US-A- 4 194 041

## Description

This invention relates generally to weather resistant windproof lined garment, and in particular to weather-resistant windproof lined sweater.

There is need for very lightweight weather-resistant garments useful for less severe or less demanding wear such as late or early season outdoor sporting events or athletic participation, such as golf, walking, hiking, football, soccer, baseball or for spectator sport attendance.

The limited give or stretch of woven textile materials causes garments utilizing them as a part of a laminate, or as one of the layers, to have limits to comfortable movement. For example, if a wearer bends the arms at the elbows or twists the upper torso in a golf swing, a woven textile will hug the body contours to give some degree of pulling discomfort, which may impede free movement. Garments which offer the least resistance to body movements are the most comfortable. Comfort and fit are key attributes from a wearer standpoint and are achieved by reducing the restraint imposed on the body by the garment and by increasing the give or stretch of the fabric.

One of the ways known presently to alleviate the problem of weather-resistance has been to use woven textile cloth combinations with waterproof membranes of porous hydrophobic plastics which may also form composites with hydrophilic materials such that the combination or composite will not pass liquid water, but will transmit water vapour at a rate to keep the interior of a garment utilizing such a material dry. Exemplary of materials and garments utilizing this method for weather resistance are those fashioned from GORE-TEX (Registered Trade Mark) membrane and GORE-TEX (Registered Trade Mark) laminate prepared according to U.S. Patents 4,194,041; 4,443,5 1; 3,953,566 and 4,187,390. Such materials used in garments render them windproof as well.

DE-A-27 37 756 discloses a laminate comprising a Gore-Tex (registered trademark) membrane and several textile materials known. These laminates combine the characteristics of the microporous PTFE-membrane with the characteristics of the laminated additional layers. The garments made from such materials however are not very comfortable because they are not stretchable and they cannot be reversed.

It is known from EP-A-0 081 850 to combine a waterproof but watervapor permeable functional inner layer with an outer textile layer whereby two layers are separated by an airgap. The functional layer is a microporous PTFE-membrane. Again, this garment is not stretchable and because it does not form an integral piece it cannot be reversed.

It is the object of the invention to make the known garments more stretchable and reversable.

The present invention provides a weather-resistant windproof lined garment comprising and outer layer consisting of a stretchable knit or woven textile and an inner stretchable liner including a first porous hydrophobic polytetrafluoroethylene layer coated with a hydrophilic polymer layer which in turn is coated with an elastomeric polyurethane or a blend of an elastomeric polyurethane with a second textile, said outer layer is separated by an air gap from the stretchable inner liner and said outer layer and said inner layer being attached at their borders by sewing or other means. Garment can, for example, be a sweater, shirt, lighc jacket, or trousers.

The invention will now be particularly described, by way of example, with reference to the accompanying drawings in which:-
Figure 1 shows a lined garment in the form of an upper body garment;
Figure 2 is a cross-section of a layered lined garment material, and
Figure 3 shows a lined garment made from the material of Figure 2 in the form of a lower body garment.

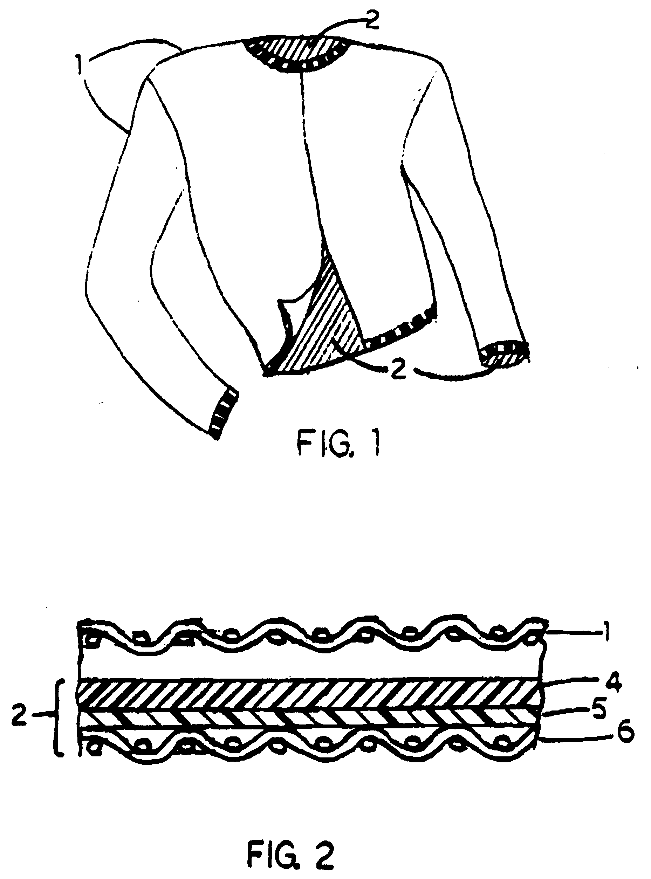

A weather-resistant windproof lined garment according to the invention can conveniently be a sweater, as in Figure 1, having an outer stretchable knitted fibre layer 1 preferably a synthetic or natural fibre knit or woven fabric, and an inner stretchable layer 2 which assists in making the garment warm in cool to cold weather. Examples of textiles used for the outer layer 1 include nylon or polyester warp limit or a blend of both or a knit raschel or tricot knit. It can be wool.

Because layer 2 has insulative properties that aid in making the garment warm and is windproof, layer 1 need not be very thick. The two layers 1 and 2 are attached by sewing at the edge junctions at as many points as are needed or desired such as wrist, neck, waist, and front closure edges. Figure 2 displays a cross-section of the stretchable two-layer material of the invention, wherein the outer stretchable layer 1 is separated by an air gap from the stretchable inner liner layer 2.

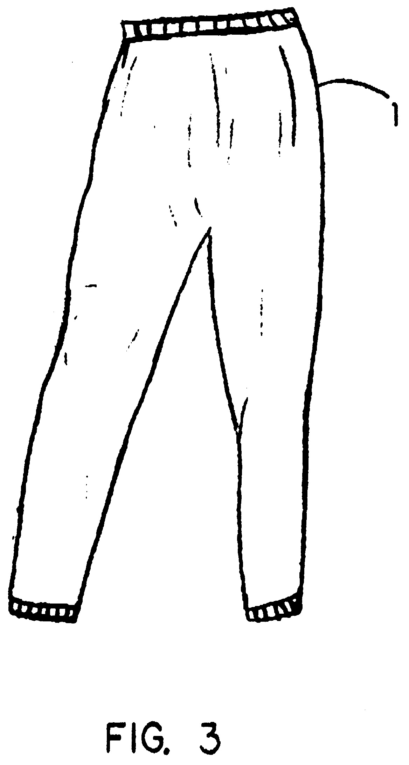

Layer 2 is made up from a layer of porous hydrophobic polymer 4, preferably the porous expanded polytetrafluoroethylene (EPTFE) membrane described in U.S. patents 3,953,566; 3,962,153; 4,096,227, and 4,187,390 coated with a hydrophilic layer 5 of a polyurethane as taught in U.S. patent 4,194,041. The liquid water-resistant water-vapour transmitting layer 4 can be a hydrophobic polyurethane, or a porous polyolefin. This liquid water resisting water vapour-transmitting composite is further bonded to a woven or knitted elastomeric textile layer 6. The combination of layers 4 and 5 are shown in the above patents to be waterproof to liquid water, resist the surface active agents in perspiration, but still permit the evaporation of perspiration by transmission of water vapour through the combination. This combination of layers 4 and 5 can be made stretchable according to U.S. Patent 4,443,511 by stretching the composite and then relaxing it. This stretchable material is then bonded to a layer 6 of polyurethane rubber, defined as spandex in the art, in the form of a woven or knitted spandex textile material. A well-known example of spandex is sold under the registered trade mark LYCRA SPANDEX and manufactured by E. I. Dupont de Nemours and Company. When taken all together, the complete windproof layered material, outer textile layer and inner combination of hydrophobic polymer/hydrophilic polymer/spandex textile, tends to stretch together as a unit, i.e. move together mechanically as a unit. The layers 4 and 5 in combination with spandex 6 is preferably united with layer 1 into a garment in such a manner that the direction of highest stretchability of layers 4 and 5 lies around the circumference of the garment, i.e., across the back, arms, and around the elbows so as to take maximum advantage of the favourable properties of the materials of manufacture. Figure 3 illustrates a lower body garmet 7.

It is thus seen that this invention provides a lightweight stretchable, garment which can be worn under comfortable clothing in cooler weather for outdoor activities - a season-extending garment combination or can be a sweater. The garment mad be reversed or turned inside out to protect against a sudden downpour of rain to keep the wearer dry.

## Claims

1. A weather-resistant windproof lined garment comprising
- an outer layer (1) consisting of a stretchable knit or woven textile and
- an inner stretchable liner (2), including a first porous hydrophobic polytetrafluoroethylene layer (4) coated with a hydrophilic polymer layer (5), which in turn is coated with an elastomeric polyurethane or a blend of an elastomeric polyurethane with a second textile (6)
- said outer layer (1) is separated by an air gap from the stretchable inner liner (2), and
- said outer layer (1) and said inner liner (2) being attached at their borders by sewing or other means.

2. A garment according to claim 1, characterized in that said second textile (6) is comprised of polyamide fibre.

3. A garment according to claims 1 or 2, characterized in that the outer layer (1) is wool.

4. A garment according to claims 1 or 2, characterized in that the outer layer (1) is a synthetic stretchable knit.

5. A garment according to any preceding claim, characterized in that said stretchable liner (2) is aligned within said garment such that the direction of maximum stretchability is around the circumference of said garment.

## Patentansprüche

1. Wetterfestes, winddichtes, gefüttertes Bekleidungsstück, umfassend
- eine Außenschicht (1), die aus einem streckbaren gestrickten oder gewebten Stoff besteht und
- ein inneres streckfähiges Futter (2) mit einer ersten porösen, hydrophoben Polytetrafluorethylen-Schicht (4), die mit einer hydrophilen Polymerschicht (5) überzogen ist, welche ihrerseits mit einem elastomeren Polyurethan oder einem Gemisch aus einem elastomeren Polyurethan und einem zweiten Stoff (6) überzogen ist,
- wobei die Außenschicht (1) durch einen Luftspalt von dem streckbaren inneren Futter (2) getrennt ist, und
- die Außenschicht (1) und das innere Futter (2) an ihren Rändern durch Vernähen oder mit anderen Mitteln befestigt sind.

2. Bekleidungsstück nach Anspruch 1, **dadurch gekennzeichnet**, daß der zweite Stoff (6) aus Polyamidfaser besteht.

3. Bekleidungsstück nach Anspruch 1 oder 2, **dadurch gekennzeichnet**, daß die Außenschicht (1) Wolle ist.

4. Bekleidungsstück nach Anspruch 1 oder 2, **dadurch gekennzeichnet**, daß die Außenschicht (1) ein synthetischer streckbarer Strickstoff ist.

5. Bekleidungsstück nach jedem vorhergehenden Anspruch, **dadurch gekennzeichnet**, daß das streckbare Futter (2) mit dem Bekleidungsstück derart ausgerichtet ist, daß die Richtung der maximalen Streckfähigkeit über den Umfang des Bekleidungsstücks verläuft.

## Revendications

1. Un vêtement doublé résistant aux intempéries et imperméable au vent comprenant:
- une couche extérieure (1) constituée par un textile extensible tissé ou tricoté et
- une couche intérieure extensible (2), comprenant une première couche (4) en un polytétrafluoroéthylène hydrophobe poreux revêtu d'une couche (5) formée d'un polymère hydrophile, laquelle à son tour est revêtue d'un polyuréthane élastomère ou d'un mélange de polyuréthane élastomère et d'un second textile (6)
- ladite couche extérieure (1) est séparée de ladite seconde couche intérieure (2) extensible par un espace contenant de l'air, et
- ladite couche extérieure (1) et ladite couche intérieure (2) sont fixées entre elles par leurs bords par couture ou par tout autre moyen.

2. Un vêtement selon la revendication 1, caractérisés par le fait que ledit second textile (6) est constitué par une fibre polyamide.

3. Un vêtement selon la revendication 1 ou 2, caractérisé par le fait que la couche extérieure (1) est formée de laine.

4. Un vêtement selon la revendication 1 ou 2, caractérisé par le fait que la couche extérieure (1) est formée d'un tricot synthétique extensible.

5. Un vêtement selon l'une quelconque des revendications ci-dessus, caractérisé par le fait que la dite doublure extensible (2) est disposée à l'intérieur du vêtement de manière à ce que la direction d'extensibilité maximale soit située sur le pourtour dudit vêtement.
